# EUROPEAN PATENT SPECIFICATION

(11) **EP 1 254 814 B1**
(45) Date of publication and mention of the grant of the patent: **08.11.2006**
(21) Application number: 02252731.1
(22) Date of filing: 17.04.2002
(51) Int. Cl.: B60R 25/00, G07C 9/00

(54) **Scanning device**
Abtastvorrichtung
Dispositif de balayage

(30) Priority: 04.05.2001 GB 0110976
(43) Date of publication of application: 06.11.2002
(73) Proprietor: ArvinMeritor Light Vehicle Systems (UK) Ltd, Birmingham, West Midlands, B30 3BW (GB)
(72) Inventor: Willats, Robin, Lea, Preston PR2 1XW (GB); Emson, John, West Bromwich, West Midlands B71 3SF (GB); Fisher, Sidney, Solihull, West Midlands B90 2HB (GB); Kalsi, Gurbinder, Oldbury, West Midlands B68 0NF (GB); Spurr, Nigel, Solihull, West Midlands B90 2PS (GB); Drysdale, Stephen, Northampton NN5 4BG (GB); Didier, Jean Bernard, 88650 Ariould (FR); Dixon, Alan, Chester CH4 9NU (GB)
(74) Representative: Foot, Paul Matthew James

(56) References cited:
- EP-A- 0 970 859
- DE-A- 19 631 331
- DE-C- 19 641 901
- US-A- 5 736 935

## Description

The present invention relates to a scanning device. More particularly, the present invention relates to a scanning device for use in vehicle access control systems, for example, which periodically scans for the existence of associated remote response devices.

As an alternative to the use of a key or remote 'plip' type devices for gaining access to a vehicle and/or starting the engine of a vehicle once inside, it is known to provide a scanning device that is associated with the vehicle and which scans for the existence of response devices within a given range by using radio frequency waves, for example. Only if a code held by the response device matches an access code held by the scanning device will access to the vehicle be permitted.

From the point of view of the vehicle user, it is desirable that the rate of scanning by such devices is relatively high so that the user does not have to wait for a relatively long period of a time before being able to enter the vehicle. However, the higher the scan rate, the greater the rate at which power is consumed by the scanning device.

The power available from either the vehicle battery or a dedicated power source for the scanning device is effectively finite when there is no other source such as a running engine to charge the battery/power source. Thus, if a vehicle having such a scanning device is left for an extended period of time whilst operating at a high scanning frequency, the power source may be exhausted which makes entry into the vehicle difficult and/or prevents the starting of the vehicle.

EP 0970859 (Toyota et al.) discloses a remote control apparatus according to the preamble of claim 1 which effects changeover between locked and unlocked states of a vehicle door that operates in a wide area detection mode until a portable unit is detected, at which point it enteres a human sensor mode.

The present invention seeks to overcome or at least mitigate the problems of the prior art.

According to one aspect of the present invention there is provided a scanning device for use in periodically scanning for the existence of at least one corresponding remote response device wherein, in use, the rate at which the scanning device scans for the response device successively decreases as the time since the detection of a previous response device increases, such that the rate of power consumption of the scanning device reduces over prolonged periods of non-use.

According to another aspect of the present invention there is provided a method of scanning for the existence of at least one corresponding remote response device comprising the steps of:
i) providing a scanning device operating at a first scanning rate;
ii) successively reducing the scanning rate of the scanning device as the time lapsed since a previous detection of a response device increases.

The embodiments of the invention are described, by way of example only, with reference to the accompanying figures, in which:
FIGURE 1 is a schematic diagram of an access control system for a vehicle incorporating a scanning device according to one embodiment of the present invention; and
FIGURE 2 is a graph illustrating the relationship between the scan rate periodicity and the time elapsed since the last detection of a response device by the scanning device of Figure 1.

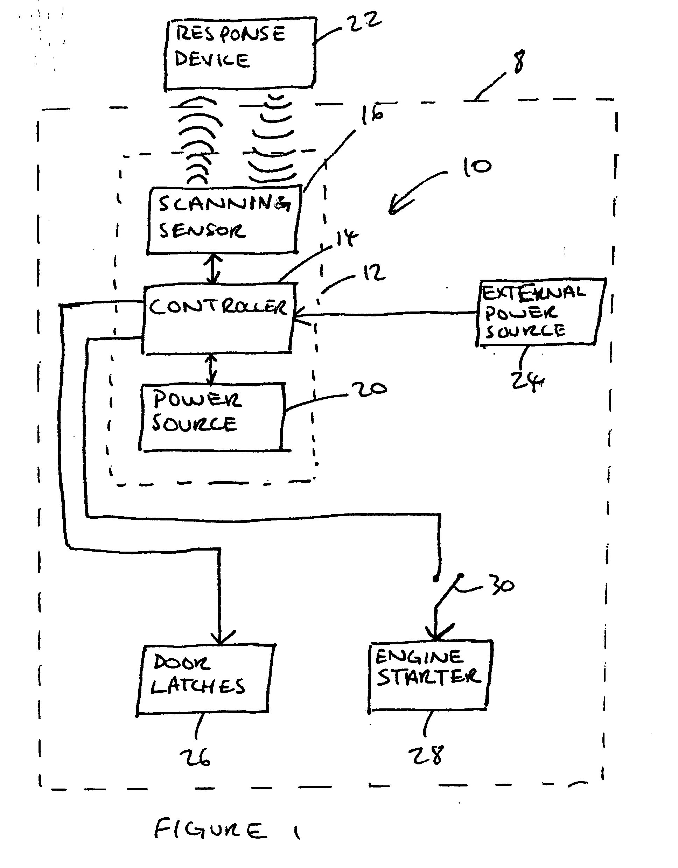

Referring to Figure 1 there is indicated generally at 10 an access control system for a vehicle 8. In this embodiment, the system 10 incorporates a scanning device 12 comprising a controller 14 (preferably a microprocessor), a scanning sensor 16 and a dedicated power source 20 such as a rechargable battery. The scanning device 12 in this embodiment is also supplied with power by an external power source 24 such as the vehicle battery.

The scanning sensor 16 is capable of communicating with one or more associated response devices 22 using radio frequency waves, for example. Outputs from the controller 14 are connected to one or more door latches 26 as well as, in this embodiment, the engine starter 28. A switch 30 is preferably provided between the controller output and the starter 28 such that the driver of the vehicle may close the switch to start the engine only once an appropriate output signal is received from controller 14. In this way, the scanning device may act as an engine immobiliser.

In use, authorised users of the vehicle carry the response device 22 which preferably takes the form of a transponder having an identifier code stored therein. The scanning sensor 16 periodically scans for the existence of such response devices 22 within its range of operation under the control of controller 14 and when such a response device 22 is detected, the scanning sensor 16 interrogates the response device to obtain the identifier code which is then passed to the controller 14 so that it may be authenticated against codes held within a memory associated with the controller 14. If there is a match, the controller then sends a signal instructing the unlatching of door latches 26, and the authorising the starting of the engine starter. Once the user is seated in the vehicle, switch 30 may be closed to start the vehicle engine.

In normal use, the scanning device 12 preferably draws its power from the external power source 24 and the controller ensures that dedicated power source 20 is fully charged from the external power source 24 (eg a battery of the vehicle to which the device is fitted). However, during long term parking, when the vehicle is not being used, the external power source 24 may become exhausted. In such circumstances, the controller 14 senses when the external power source falls below a predetermined certain level of charge and instead draws power from the dedicated power source 20 (eg a battery associated with the device), in order to prolong the period during which the vehicle may be accessed beyond the point at which the external power source becomes exhausted.

Because vehicle users wish to gain access to the vehicle rapidly, the scanning rate (frequency) is normally set relatively high at, say, two second intervals (0.5Hz).

However, at this scanning rate, the external power source 24 and in particular the dedicated power source 20, become rapidly exhausted during a long period of non-use.

Therefore, the scanning device 12 of the present invention reduces the scan rate dependent upon the time elapsed since a response device was previously detected. In some classes of embodiment, the scan rate reduction may be in direct proportion to the time elapsed or may reduce exponentially, logarithmically or in accordance with another suitable mathematical relationship. However, in preferred embodiments, the scan rate reduces in a 'stepped' manner. The reduction may be a single step or multiple steps

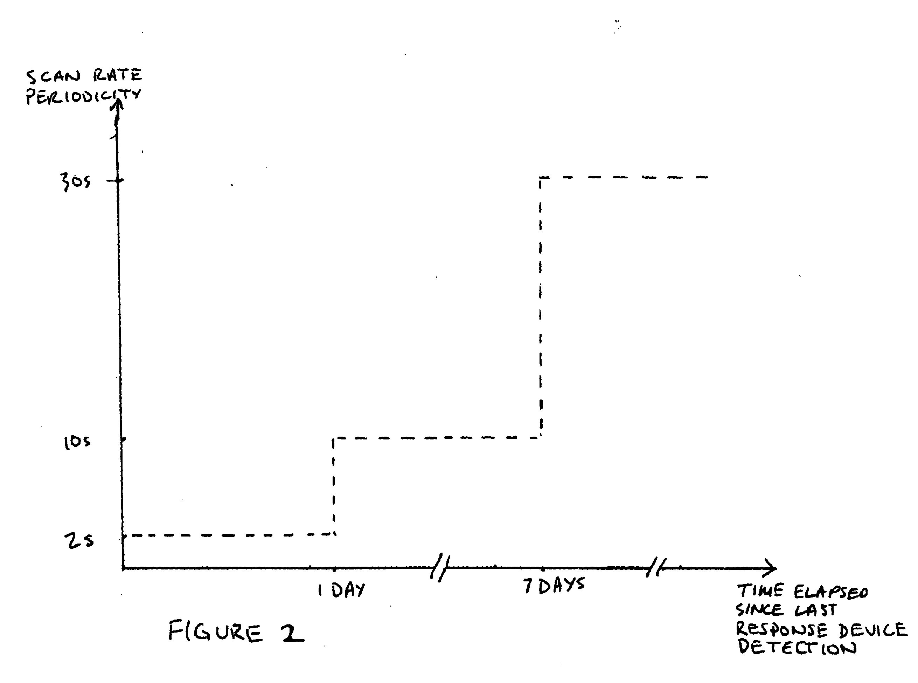

Referring now to Figure 2, a graph illustrating a notional example of such variable scan rate is shown. The scan rate, elapsed times and number of reduction steps may, of course, be altered according to particular user requirements. It can be seen from Figure 2 that for an initial period of one day since the last response device was detected, the scan rate is once every two seconds (in order to allow for a rapid response to the approach of a potential vehicle user when the vehicle is merely left overnight, for example). Beyond one day, the rate then drops to once every ten seconds (0.1 Hz) to allow for a slightly less rapid response when the vehicle is left for a longer period, such as airport parking, for example. This rate reduction results in a reduction in power consumption that potentially extends the life of the power source by five times in comparison with the two second scan rate.

After seven days of non-use, which could in practical terms represent the vehicle being left for sale with a dealer, or in winter layup, the scan rate reduces to once every thirty second (0.033 Hz), thereby potentially increasing the battery life fifteen fold with respect to the two second interval scan rate.

Clearly, such a response delay would be unacceptable in day to day use, but would not present a problem when the vehicle is to be operated for the first time after a long period of non-use.

In order to determine the time elapsed since the last detection of a response device, a time logging device such as an in-built quartz timer and counter (not shown) are advantageously incorporated into the controller 14.

It should be understood that numerous changes may be made within the scope of the present invention. For example, alternative types of scanner using other forms of electromagnetic radiation such as microwave, or infra-red, may be employed, as may sonar scanners. The controller may also output to actuators and the like for adjusting the seating, steering wheel and mirror positions, for example, in order to personalise the vehicle settings for a particular user carrying a response device. Furthermore, the controller may be incorporated into the overall vehicle control system rather than being part of the stand-alone scanning device. It is envisaged that the scanning device may be used in other fields such as building access control, for example.

## Claims

1. A scanning device (12) for vehicle or building for use in periodically scanning for the existence of at least one corresponding remote response device (22) **characterised in that**, in use, the rate at which the scanning device scans for the response device successively decreases as the time since the detection of a previous response device increases, such that the rate of power consumption of the scanning device reduces during periods of non-use.

2. A scanning device according to Claim 1 suitable for use in an access control system (10).

3. A scanning device according to Claim 1 or Claim 2 suitable for use in an engine immobiliser.

4. A scanning device according to any preceding Claim wherein the scanning device is associated with a vehicle (8).

5. A scanning device according to any preceding Claim wherein the device scans using electromagnetic radiation.

6. A scanning device according to any one of Claims 4 or 5 wherein the device is powered by a remote power source (24) associated with the vehicle.

7. A scanning device according to any Claims 4 to 6 wherein the device is powered by a dedicated power source (20) associated with the device.

8. A scanning device according to Claim 7 when dependent upon Claim 6 wherein the dedicated power source provides a back-up to remote vehicle power source.

9. A scanning device according to Claim 8 wherein the dedicated power source supplies power to the scanning device once the power stored by the remote power source falls below a predetermined level.

10. A scanning device according to any preceding Claim wherein the decrease in the scan rate is a single step or multi-stepped.

11. An access control system incorporating a scanning device according to any preceding claim.

12. A method of scanning for the existence of at least one corresponding remote response device comprising the steps of:
i) providing a scanning device (12) operating at a first scanning rate;
ii) successively reducing the scanning rate of the scanning device as the time lapsed since a previous detection of a response device increases.

## Patentansprüche

1. Abtastvorrichtung (12) für ein Fahrzeug oder ein Gebäude zur Verwendung beim regelmäßigen Abtasten auf das Vorhandensein mindestens einer entsprechenden entfernten Antwortvorrichtung (22), **dadurch gekennzeichnet, dass** im Gebrauch die Geschwindigkeit, mit der die Abtastvorrichtung auf das Vorhandensein der Antwortvorrichtung abtastet, sukzessive abnimmt, wenn die Zeit seit dem Erfassen einer vorhergehenden Antwortvorrichtung zunimmt, so dass die Höhe des Energieverbrauchs der Abtastvorrichtung in Zeiten des Nichtgebrauchs kleiner wird.

2. Abtastvorrichtung nach Anspruch 1, die geeignet ist zur Verwendung in einem Zugangskontrollsystem (10).

3. Abtastvorrichtung nach Anspruch 1 oder Anspruch 2, die geeignet ist zur Verwendung bei einer Wegfahrsperre.

4. Abtastvorrichtung nach einem der vorhergehenden Ansprüche, wobei die Abtastvorrichtung zu einem Fahrzeug (8) gehört.

5. Abtastvorrichtung nach einem der vorhergehenden Ansprüche, wobei die Vorrichtung mittels elektromagnetischer Strahlung abtastet.

6. Abtastvorrichtung nach einem der Ansprüche 4 oder 5, wobei die Vorrichtung durch eine zu dem Fahrzeug gehörige entfernte Energiequelle (24) betrieben wird.

7. Abtastvorrichtung nach einem der Ansprüche 4 bis 6, wobei die Vorrichtung durch eine zu der Vorrichtung gehörige spezielle Energiequelle (20) betrieben wird.

8. Abtastvorrichtung nach Anspruch 7, wenn dieser abhängig ist von Anspruch 6, wobei die spezielle Energiequelle eine Reserve für die entfernte Energiequelle des Fahrzeugs darstellt.

9. Abtastvorrichtung nach Anspruch 8, wobei die spezielle Energiequelle der Abtastvorrichtung Energie zuführt, sobald die von der entfernten Energiequelle gespeicherte Energe unter ein vorbestimmtes Niveau fällt.

10. Abtastvorrichtung nach einem der vorhergehenden Ansprüche, wobei die Abnahme in der Abtastgeschwindigkeit einstufig oder mehrstufig erfolgt.

11. Zugangskontrollsystem mit einer Abtastvorrichtung nach einem der vorhergehenden Ansprüche.

12. Verfahren zum Abtasten auf das Vorhandensein mindestens einer entsprechenden Antwortvorrichtung, mit den folgenden Schritten:
i) Bereitstellen einer Abtastvorrichtung (12), die mit einer ersten Abtastgeschwindigkeit arbeitet;
ii) sukzessives Verringern der Abtastgeschwindigkeit, wenn die seit einer vorausgegangenen Erfassung einer Antwortvorrichtung vergangene Zeit zunimmt.

## Revendications

1. Un dispositif de balayage (12), pour un véhicule ou un bâtiment, destiné à être utilisé pour rechercher périodiquement l'existence d'au moins un dispositif répondeur à distance correspondant (22), **caractérisé en ce que**, en fonctionnement, le rythme auquel le dispositif de balayage recherche le dispositif répondeur diminue au fur et à mesure qu'augmente le temps écoulé depuis la détection d'un précédent dispositif répondeur, de sorte que le rythme de la puissance consommée par le dispositif de balayage diminue pendant les périodes d'inutilisation.

2. Un dispositif de balayage selon la revendication 1, approprié pour être utilisé dans un système de contrôle d'accès (10).

3. Un dispositif de balayage selon la revendication 1 ou 2, approprié pour être utilisé dans un anti-démarreur.

4. Un dispositif de balayage selon l'une quelconque des revendications précédentes, le dispositif de balayage étant associé à un véhicule (8).

5. Un dispositif de balayage selon l'une quelconque des revendications précédentes, le dispositif balayant par rayonnement électromagnétique.

6. Un dispositif de balayage selon l'une quelconque des revendications 4 ou 5, le dispositif étant alimenté par une source d'alimentation distante (24) associée au véhicule.

7. Un dispositif de balayage selon l'une quelconque des revendications 4 à 6, le dispositif étant alimenté par une source d'alimentation dédiée (20) associée au dispositif.

8. Un dispositif de balayage selon la revendication 7 quand elle dépend de la revendication 6, la source d'alimentation dédiée constituant une alimentation de secours pour la source d'alimentation distante du véhicule.

9. Un dispositif de balayage selon la revendication 8, dans lequel la source d'alimentation dédiée fournit de l'énergie au dispositif de balayage une fois que l'énergie stockée par la source d'alimentation distante descend en dessous d'un niveau prédéterminé.

10. Un dispositif de balayage selon l'une quelconque des revendications précédentes, dans lequel la baisse du rythme de balayage s'effectue en une ou plusieurs étapes.

11. Un système de contrôle d'accès incorporant un dispositif de balayage selon l'une quelconque des revendications précédentes.

12. Un procédé pour rechercher l'existence d'au moins un dispositif répondeur à distance correspondant, comprenant les étapes consistant à :
i) prévoir un dispositif de balayage (12) fonctionnant à un premier rythme de balayage ;
ii) réduire successivement le rythme de balayage du dispositif de balayage, au fur et à mesure qu'augmente le temps écoulé depuis une détection précédente d'un dispositif répondeur.
